# EUROPEAN PATENT APPLICATION

(11) **EP 4 407 780 A1**
(43) Date of publication of application: **31.07.2024**
(21) Application number: 23305101.0
(22) Date of filing: 26.01.2023
(51) Int. Cl.: H01M 50/528, H01M 50/531, H01M 50/54, H01M 50/553, H01M 50/55

(54) **PRISMATIC BATTERY CELL SUBASSEMBLY WITH TWO OR FOUR STACKS OF ELECTRODES**

(71) Applicant: Automotive Cells Company SE, 92300 Levallois Perret (FR)
(72) Inventor: CHOI, Hangjune, 33200 BORDEAUX (FR)
(74) Representative: Alatis

(57) **Abstract**

A prismatic battery cell subassembly (10) comprises a first stack of electrodes (11) provided, for each polarity, with a multilayer bundle of flexible electrode tabs (36A, 36B), of the same polarity, protruding from a connection side (32) of the first stack of electrodes (11), and, associated with each polarity, a current collector (138A, 138B) with a top face (42) and a bottom face (44), the bottom face (44) being opposite to and facing away from the top face (42) and welded to the multilayer bundle of flexible electrode tabs (36A, 36B) of the same polarity. The first stack of electrodes (11) is movable between an assembly position and an operational position. In the assembly position, the connection side (32) of the first stack of electrodes (11) is at an angle relative to the top face (42) of each current collector (138A, 138B), and leaves a portion of the top face (42) of each current collector (138A, 138B) uncovered. In the operational position, the connection side (32) of the first stack of electrodes (11) faces and covers said portion of the top face (42) of each current collector (138A, 138B).

## Description

### TECHNICAL FIELD OF THE INVENTION

The present invention relates to a prismatic battery cell subassembly, in which several stacks of electrodes are connected in parallel to one or more current collectors.

### BACKGROUND ART

Prismatic battery cells with two stacks of electrodes connected electrically in parallel to a common terminal foot are known in the art, e.g., from US 10,109,838B2 or WO2019/166641A1. The electrode tabs of the same polarity of the two adjacent stacks of electrodes are usually welded to a current collector, which, in turn, is welded to the terminal foot. The structure of the intermediate current collector is usually complex and bulky. Welding the electrode tabs to the current collector and, subsequently, the current collector to the terminal foot may prove difficult.

### SUMMARY OF THE INVENTION

The present invention aims to provide means which make it easier to weld the flexible electrode tabs to the current collector and the current collector to a terminal foot. Furthermore, it enables the assembly of electrode tabs from two stacks of electrodes to a common current collector and subsequently of two current collectors to a common terminal foot.

According to a first aspect of the invention, there is provided a prismatic battery cell subassembly with two polarities, comprising at least a first stack of electrodes and a current collector for each polarity. The first stack of electrodes is provided, for each polarity, with a multilayer bundle of flexible electrode tabs, of a same polarity, protruding from a connection side of the first stack of electrodes. The current collector associated with each polarity has a top face and a bottom face, the bottom face being opposite to, and facing away from, the top face and welded to the multilayer bundle of flexible electrode tabs of the same polarity. Remarkably, the first stack of electrodes is movable between an assembly position and an operational position. Wherein, the connection side of the first stack of electrodes in the assembly position is at an angle, preferably a right or obtuse angle, relative to the top face of each current collector and leaves a portion of the top face of each current collector uncovered, and the connection side of the first stack of electrodes, in the operational position, faces and covers said portion of the top face of each current collector.

Because the first stack of electrodes is movable relative to each current collector, the portion of the upper side of each current collector which is left uncovered in the assembly position is accessible for welding operations, in particular for laser welding between the current collector and a terminal foot applied to the bottom face of the current collector. Notably, there is no need to bend, or otherwise plastically deform, the current collectors to reach the operational position, which drastically reduces the risk of damage to the first stack of electrodes that could lead to a short-circuit.

According to various embodiments, preferably, one or more of the following conditions are met:
- each current collector is a rigid metal piece, preferably made of sheet metal; and/or
- each current collector has two opposite sides which join the bottom face and the top face, facing away from each other, and the multilayer bundle of flexible electrode tabs, of the same polarity, in the operational position, faces one of the two opposite sides; and/or
- the top face of each current collector is flat; and/or
- the bottom face of each current collector is flat, and/or
- each current collector is flat.

In a preferred embodiment, a terminal foot is associated with each polarity. For each polarity, the associated terminal foot is welded to a portion of the bottom face of the associated current collector, opposite the portion of the top face of the associated current collector covered by the connection side of the first stack of electrodes in the operational position. This design is particularly space-saving and provides robust and reliable electrical connections. The assembly process can be kept simple and cost-effective. In practice, the prismatic battery cell subassembly can be assembled by:
- welding, for each polarity, the multilayer bundle of flexible electrode tabs, of the same polarity, to the bottom face of the current collector, preferably with the stack of the electrodes in the assembly position, then
- while the first stack of electrodes is in the assembly position and leaves the portion of the top face of each current collector uncovered, welding, for each polarity, the terminal foot to the bottom face of the current collector using laser welding applied to said portion of the top face of the current collector, and
- subsequently moving the first stack of electrodes to the operational position.

The same terminal foots can be used to connect the first stack of electrodes and an additional first stack of electrodes in parallel. Accordingly, in a preferred embodiment, the prismatic battery comprises at least an additional first stack of electrodes and, an additional current collector associated with each polarity. The additional first stack of electrodes is provided, for each polarity, with an additional multilayer bundle of flexible electrode tabs, of the same polarity, protruding from a connection side of the additional first stack of electrodes. The additional current collector, associated with each polarity, has a top face and a bottom face. The bottom face is opposite to, and faces away from, the top face, and is welded to the additional multilayer bundle of flexible electrode tabs of the same polarity. The additional first stack of electrodes is movable between an assembly position and an operational position, wherein the connection side of the additional first stack of electrodes in the assembly position is at an angle, preferably a right or obtuse angle, relative to the top face of each additional current collector and leaves a portion of the top face of each additional current collector uncovered, and the connection side of the additional first stack of electrodes, in the operational position, faces and covers said portion of the top face of each additional current collector. The terminal foot associated with each polarity is welded to a portion of the bottom face of the additional current collector, opposite the portion of the top face of the additional current collector covered by the connection side of the additional first stack of electrodes in the operational position.

According to various embodiment, one or more of the following conditions are preferably met:
- each additional current collector is a rigid metal piece, preferably made of sheet metal; and/or
- the top face of each additional current collector is flat; and/or
- the bottom face of each additional current collector is flat; and/or
- each additional current collector is flat; and/or
- for each polarity, the top face of the additional current collector is coplanar with the top face of the current collector; and/or
- for each polarity, the bottom face of the additional current collector is coplanar with the bottom face of the current collector.

The same structure can also be duplicated to connect two stacks of electrodes to one current collector for each polarity. Hence, in a preferred embodiment, the prismatic battery cell subassembly comprises at least a second stack of electrodes, provided, for each polarity, with a further multilayer bundle of flexible electrode tabs, of the same polarity, protruding from a connection side of the second stack of electrodes. The bottom face of the current collector associated with each polarity is welded to the further multilayer bundle of flexible electrode tabs of the same polarity. The second stack of electrodes has an operational position, in which the connection side of the second stack of electrodes faces and covers a further portion of the top face of each current collector.

For each polarity, the second stack of electrodes can be connected to the current collector by welding the further multilayer bundle of flexible electrode tabs, of the same polarity, to the bottom face of the current collector. Preferably, this is completed while the second stack of electrodes is in an assembly position, in which the connection side of the first stack of electrodes is at an angle, preferably a right or obtuse angle, relative to the top face of each current collector and leaves a portion of the top face of each current collector uncovered.

In some embodiments, it may be advantageous to weld the terminal foot associated with each polarity to the associated current collector while the second stack of electrodes is in the operational position. In such an instance, the terminal foot associated with each polarity is not welded to a portion of the bottom face of the associated current collector, opposite the further portion of the top face of the associated current collector.

In a preferred embodiment, the current collector, for each polarity, has two opposite sides joining the bottom face and the top face, with the two opposite sides facing away from each other. For each polarity, the multilayer bundle of flexible electrode tabs, of the same polarity, of the first stack of electrodes, in the operational position, faces one of the two opposite sides and the multilayer bundle of flexible electrode tabs, of the same polarity, of the second stack of electrodes, in the operational position, faces the other one of the two opposite sides. A particularly compact layout is obtained when the first stack of electrodes and the second stack of electrodes, in the operational position, face each other on either side of a median plane, perpendicular to the top face of each current collector. Preferably, the median plane is a contact plane between the first and second stacks of electrodes, with the first stack of electrodes on one side of the median plane and the second stack of electrodes on another side of the median plane.

In one embodiment, a common terminal foot can be shared by four stacks of electrodes. More specifically, the prismatic battery cell subassembly comprises at least an additional second stack of electrodes, provided, for each polarity, with a multilayer bundle of flexible electrode tabs, of the same polarity, protruding from a connection side of the additional second stack of electrodes. The bottom face of the additional current collector, associated with each polarity, is welded to the multilayer bundle of flexible electrode tabs, of the same polarity, of the additional second stack of electrode tabs. The additional second stack of electrodes has an operational position, in which the connection side of the additional second stack of electrodes faces and covers a further portion of the top face of each additional current collector. Preferably, the terminal foot associated with each polarity is not welded to a portion of the bottom face of the associated additional current collector, opposite the further portion of the top face of the associated additional current collector.

In one embodiment, each additional current collector has two opposite sides which join the bottom face and the top face and face away from each other. For each polarity, the multilayer bundle of flexible electrode tabs, of the same polarity, of the additional first stack of electrodes, in the operational position, preferably faces one of the two opposite sides, while the multilayer bundle of flexible electrode tabs, of the same polarity, of the additional second stack of electrodes, in the operational position, faces the other one of the two opposite sides.

A particularly compact layout is achieved if the additional first stack of electrodes and the additional second stack of electrodes, in the operational position, face each other on either side of a median plane, perpendicular to the top face of the each additional current collector. The median plane being preferably a contact plane between the additional first stack of electrodes and the additional second stack of electrodes, with the additional first stack of electrodes on one side of the median plane and the additional second stack of electrodes on another side of the median plane.

Compactness is also increased if the second stack of electrodes and the additional second stack of electrodes, in the operational position, face each other on either side of a median plane. The median plane is preferably a contact plane between the second stack of electrodes and the additional second stack of electrodes.

The four-stack prismatic battery cell subassembly can be assembled by:
- for each polarity, welding the multilayer bundle of flexible electrode tabs, of the same polarity, of the first and second stacks of electrodes to the bottom face of the associated current collector,
- for each polarity, welding the multilayer bundle of flexible electrode tabs, of the same polarity, of the additional first and second stacks of electrodes to the bottom face of the additional current collector,
- while the additional first stack of electrodes is in the assembly position, leaving the portion of the top face of each additional current collector uncovered, and the second stack of electrodes is in the operational position and faces the additional second stack of electrodes in the operational position, welding the terminal foot associated with each polarity to the bottom face of the associated current collector and additional current collector using laser welding applied to said portion of the top face of the associated current collector and additional current collector, and
- subsequently moving the first stack of electrodes and additional stack of electrodes to the operational position.

Preferably, one or more of the following holds true:
- for each polarity, welding the multilayer bundle of flexible electrode tabs, of the same polarity, of the first stack of electrodes, to the bottom face of the current collector is performed with the first stack of the electrodes in the assembly position, and/or
- for each polarity, welding the multilayer bundle of flexible electrode tabs, of the same polarity, of the second stack of electrodes, to the bottom face of the associated current collector is performed with the second stack of the electrodes in the assembly position, and/or
- for each polarity, welding the multilayer bundle of flexible electrode tabs, of the same polarity, of the additional stack of electrodes, to the bottom face of the additional current collector is performed with the additional stack of the electrodes in the assembly position, and/or
- for each polarity, welding the multilayer bundle of flexible electrode tabs, of the same polarity, of the additional second stack of electrodes, to the bottom face of the associated additional current collector is performed with the additional second stack of the electrodes in the assembly position.

### BRIEF DESCRIPTION OF THE FIGURES

Other advantages and features of the present invention will become more apparent from the following description of a specific embodiment of the invention. The specific embodiment is herein described as a non-restrictive example only, represented in the accompanying drawings, in which:
- figure 1 is a schematic side view of a pre-assembly step of welding together a bundle of electrode tabs of a stack of electrodes;
- figure 2 is a schematic top view of two stacks of electrodes and two current collectors before a welding operation;
- figure 3 is a schematic cross-section through section plane III-III of figure 2 during a welding operation between two bundles of electrode tabs and a current collector;
- figure 4 is a schematic top view of two stacks of electrodes and two additional stacks of electrodes after the welding operation of figure 3, and before additional welding operations;
- figure 5 is a schematic cross-section through section plane V-V of figure 4 during a welding operation between two current collectors and a terminal foot.
- figure 6 is a schematic side view of a subsequent assembly step of positioning the four stacks of electrodes in an operational position.

Corresponding reference numerals refer to the same or corresponding parts in each of the figures.

### DETAILED DESCRIPTION OF PREFERRED EMBODIMENTS

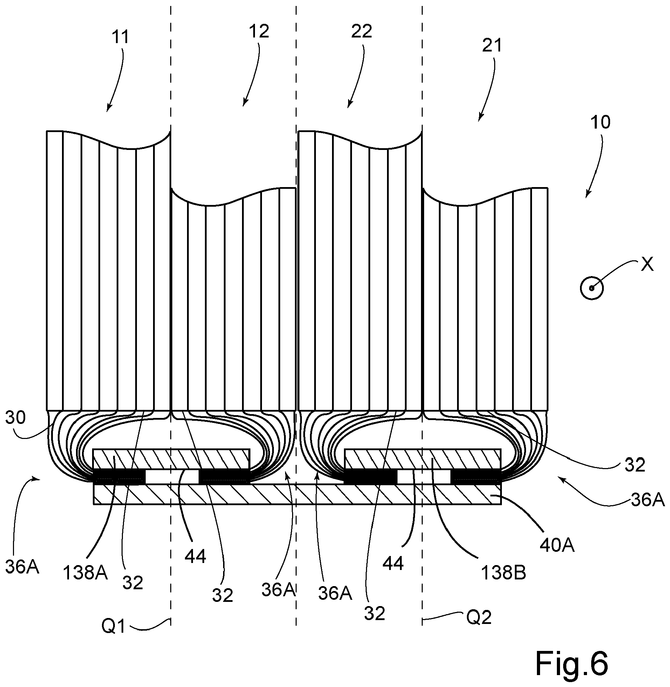

With reference to figure 6, a prismatic battery cell subassembly **10** comprises four stacks of electrodes, which will be referred to as "a first stack of electrodes" **11,** "a second stack of electrodes" **12,** an "additional first stack of electrodes" **21** and an "additional second stack of electrodes" **22.**

Each of the four stacks of electrodes **11, 12, 21, 22** is a repetitive arrangement of layers composed of a positive electrode, a separator, a negative electrode, and a separator. The electrodes are provided with flexible electrode tabs **30,** which project from a connection side **32** of the associated stack of electrodes **11, 12, 21, 22.** The electrode tabs **30** connected to the positive electrodes are spaced apart from the electrode tabs **30** connected to the negative electrodes, along a length dimension **X** of the connection side **32** of the respective stack of electrodes **11, 12, 21, 22,** perpendicular to the plane of figure 6. The electrode tabs **30** of each polarity are placed on top of each other and grouped together to form a multi-layered bundle of electrode tabs of the same polarity **36A, 36B,** which is welded to a current collector.

More specifically, two current collectors **138A, 138B,** one associated with each polarity, are welded to the bundles of flexible electrode tabs **36A, 36B** of the first and second stacks of electrodes **11, 12,** and two additional current collectors **238A, 238B,** one associated with each polarity, are welded to the bundles of flexible electrode tabs **36A, 36B** of the additional first and second stacks of electrodes **21, 22.** The current collector **138A,** resp. **138B** and additional current collector **238A,** resp. **238B** of same polarity are welded to a common terminal foot **40A,** resp. **40B** associated with the same polarity. Each current collector **138A, 138B** and additional current collector **238A, 238** is made of sheet metal and has a prismatic shape with opposite top and bottom faces **42, 44** and opposite lateral sides **46, 48.** Remarkably, the protruding ends of the bundles of flexible electrode tabs **36A, 36B** are welded to the bottom face **44** of the associated current collector **138A, 138B, 238A, 238B,** sandwiched between said current collector and the terminal foot **40A, 40B,** while the connection side **32** of the stacks of electrodes **11, 12, 21, 22** face the top sides **42** of the associated current collectors **138A, 138B, 238A, 238B.**

To reach this compact final operational configuration, a number of assembly operations have to be completed.

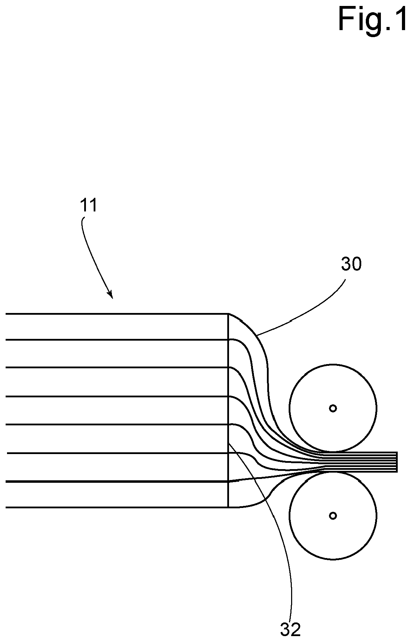

Initially, each stack of electrodes **11, 12, 21, 22** is provided with two loose sets of electrode tabs **30,** one for each polarity, which protrude from a connection side of the first stack of electrodes. In a pre-assembly step, each set of electrode tabs **30** of same polarity is bundled together, using for example ultrasonic vibration welding or friction welding, to form a bundle of flexible electrode tabs, as illustrated in figure 1.

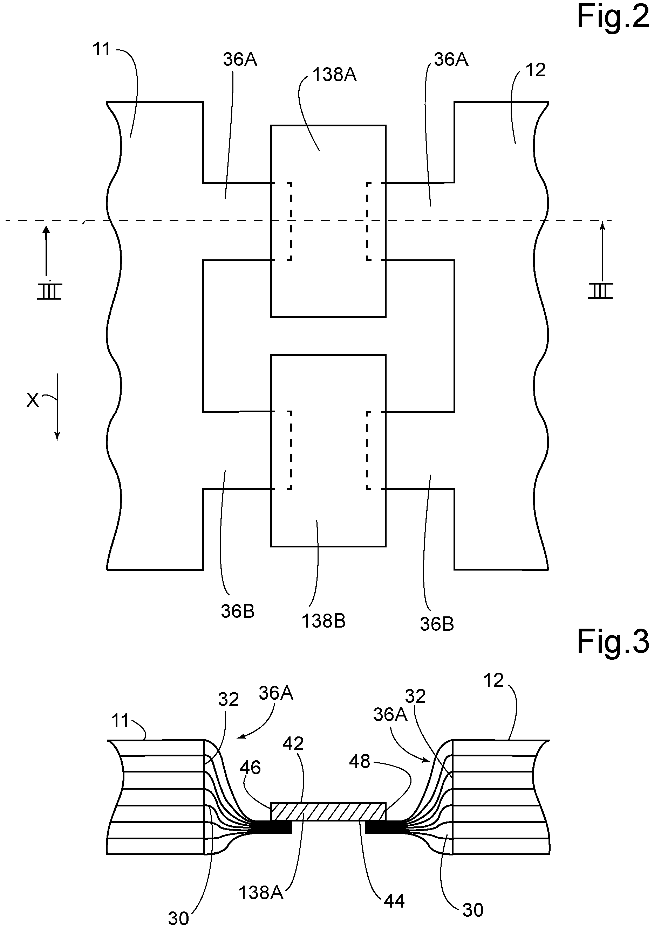

The first stack of electrodes **11** and the second stack of electrodes **12** are then placed on opposite sides of two current collectors **138A, 138B,** as illustrated in figure 2, with the free ends of the bundles of electrode tabs **36A, 36B** facing the bottom face **44** of the current collector **138A, 138B** of the same polarity. In this assembly position, the connection side **32** of the first stack of electrodes **11** is at an angle, preferably a right or obtuse angle, relative to the top face **42** of each current collector **138A, 138B** and leaves a portion of the top face **42** of each current collector **138A, 138B** uncovered. The free ends of the bundles of electrode tabs **36A, 36B** are then welded to the associated current collector **138A, 138B** using ultrasonic vibration welding.

The protruding dimension of each bundle of flexible electrode tabs **36A, 36B** is sufficient to allow each stack of electrodes **11, 12** to move between the assembly position of figures **2** and **3** and an operational position, in which the connection side **32** of the stack of electrodes **11, 12** faces and covers a portion of the top face **42** of each current collector **138A, 138B,** which was previously uncovered, and through which the ultrasonic vibration welding operation illustrated in figure 3 took place.

The same operations are repeated with the additional first stack of electrodes **21,** the additional second stack of electrodes **22** and the additional current collectors **238A, 238B,** one for each polarity.

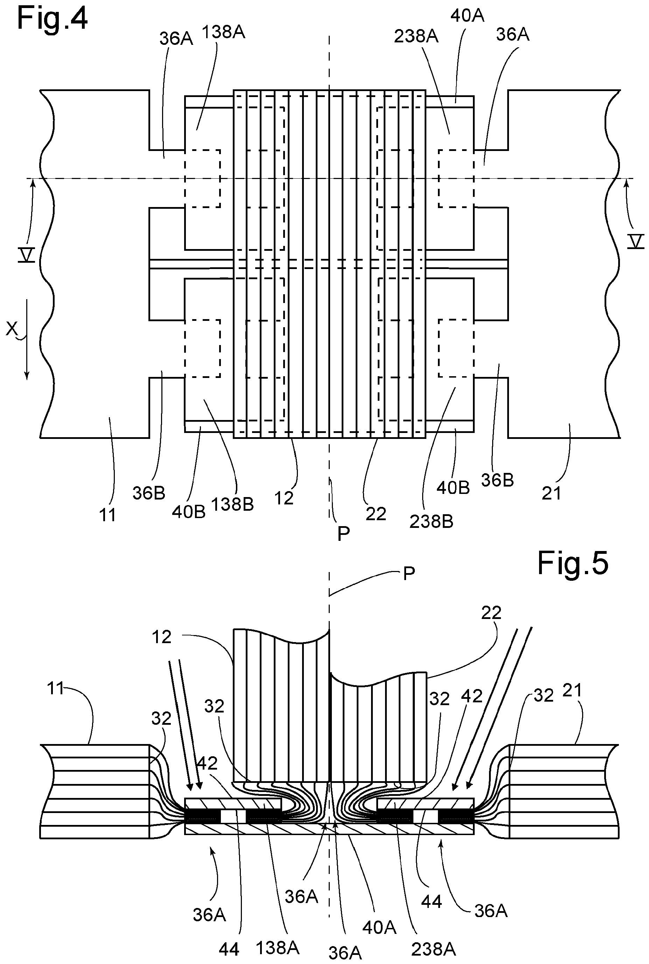

In a subsequent assembly step, the two subassemblies resulting from the welding operations on the first and second stacks of electrodes **11, 12** and on the additional first and second stacks of electrodes **21, 22** are placed side by side, as shown in figure 4. Wherein, the first and additional first stacks of electrodes **11, 21** are in the assembly position and the second and additional second stacks of electrodes **12, 22** are in the operational position, facing each other on either side of a plane of symmetry **P,** and preferably in contact with each other along this plane of symmetry **P.**

For each polarity, a terminal foot **40A, 40B** is placed so as to face the bottom face **44** of the current collector **138A, 138B** and the additional current collector **238A, 238B** of the same polarity. In this position, a welding operation takes place, for each polarity, between the associated current collector **138A, 138B** and the additional current collector **238A, 238B** on the one hand, and the terminal foot **40A, 40B** associated with the same polarity on the other. As illustrated in figure 5, laser welding is applied through the portions of each current collector **138A, 138B** and each additional current collector **238A, 238B** which remain uncovered while the first and additional first stacks of electrodes **11, 21** are in their assembly position.

Finally, the first and additional first stacks of electrodes **11, 21** are moved to their operational position, as illustrated in figure 6, thus are in contact with the second and additional second stacks of electrodes **12, 22,** respectively, along two contact planes **Q1, Q2.**

While the invention has been described in the context of a subassembly with four stacks of electrodes **11, 12, 21, 22,** it is also applicable to a subassembly with only two stacks of electrodes **11, 12** on one set of current collectors **138A, 138B** or with two stacks of electrodes **11, 22,** each one on a separate set of current collectors **138A, 138B, 238A, 238B.**

## Claims

1. A prismatic battery cell subassembly (10), with two polarities, said prismatic battery cell subassembly (10) comprising at least:
- a first stack of electrodes (11) provided, for each polarity, with a multilayer bundle of flexible electrode tabs (36A, 36B) of a same polarity, protruding from a connection side (32) of the first stack of electrodes (11), and associated with each polarity, a current collector (138A, 138B) with a top face (42) and a bottom face (44), the bottom face (44) being opposite to, and facing away from, the top face (42) and welded to the multilayer bundle of flexible electrode tabs (36A, 36B) of the same polarity,
**characterised in that** the first stack of electrodes (11) is movable between an assembly position and an operational position, wherein the connection side (32) of the first stack of electrodes (11) in the assembly position is at an angle, preferably a right or obtuse angle, relative to the top face (42) of each current collector (138A, 138B), and leaves a portion of the top face (42) of each current collector (138A, 138B) uncovered, and the connection side (32) of the first stack of electrodes (11), in the operational position, faces and covers said portion of the top face (42) of each current collector (138A, 138B).

2. The prismatic battery cell subassembly (10) of claim 1, further comprising, associated with each polarity, a terminal foot (40A, 40B) welded to a portion of the bottom face (44) of the associated current collector (138A, 138B) opposite the portion of the top face (42) of the associated current collector (138A, 138B) covered by the connection side (32) of the first stack of electrodes (11) in the operational position.

3. The prismatic battery cell subassembly (10) of claim 2, further comprising at least:
- an additional first stack of electrodes (21) provided, for each polarity, with an additional multilayer bundle of flexible electrode tabs (36A, 36B), of the same polarity, protruding from a connection side (32) of the additional first stack of electrodes (21), and
- associated with each polarity, an additional current collector (238A, 238B) with a top face (42) and a bottom face (44), the bottom face (44) being opposite to, and facing away from, the top face (42) and welded to the additional multilayer bundle of flexible electrode tabs (36A, 36B) of the same polarity,
wherein the additional first stack of electrodes (21) is movable between an assembly position and an operational position, wherein the connection side (32) of the additional first stack of electrodes (21), in the assembly position, is at an angle, preferably a right or obtuse angle, relative to the top face (42) of each additional current collector (238A, 238B) and leaves a portion of the top face (42) of each additional current collector (238A, 238B) uncovered, and the connection side (32) of the additional first stack of electrodes (21), in the operational position, faces and covers said portion of the top face (42) of each additional current collector (238A, 238B), and
wherein the terminal foot (40A, 40B), associated with each polarity, is welded to a portion of the bottom face (44) of the associated additional current collector, (238A, 238B) opposite the portion of the top face (42) of the associated additional current collector (238A, 238B), covered by the connection side (32) of the additional first stack of electrodes (21) in the operational position.

4. A prismatic battery cell subassembly (10) of any one of the preceding claims, comprising at least a second stack of electrodes (12), provided, for each polarity, with a multilayer bundle of flexible electrode tabs (36A, 36B), of the same polarity, protruding from a connection side (32) of the second stack of electrodes (12), wherein
- the bottom face (44) of the current collector (138A, 138B), associated with each polarity, is welded to the multilayer bundle of flexible electrode tabs (36A, 36B), of the same polarity, of the second stack of electrodes (12), and
- the second stack of electrodes (12) has an operational position, wherein the connection side (32) of the second stack of electrodes (12), in the operational position, faces and covers a second portion of the top face (42) of each current collector.

5. The prismatic battery cell subassembly of claim 4, wherein the terminal foot (40A, 40B), associated with each polarity, is not welded to a portion of the bottom face (44) of the current collector (138A, 138B) opposite the further portion of the top face of the current collector (138A, 138B).

6. The prismatic battery cell subassembly of any one of claims 4 to 5 combined with any one of claims 2 to 3, wherein one or more of the following holds true:
- the current collector (138A, 138B), associated with each polarity, has two opposite sides (46, 48) joining the bottom face (44) and the top face (42), the two opposite sides (46, 48) facing away from each other, the multilayer bundle of flexible electrode tabs (36A, 36B), of the same polarity, of the first stack of electrodes, in the operational position, faces one of the two opposite sides (46, 48) and the multilayer bundle of flexible electrode tabs (36A, 36B), of the same polarity, of the second stack of electrodes, in the operational position, faces the other one of the two opposite sides (46, 48), and/or
- the first stack of electrodes (12) and the second stack of electrodes (12), in the operational position, face each other on either side of a median plane (Q1), perpendicular to the top face (42) of each current collector (138A, 138B), the median plane (Q1) being preferably a plane of contact between the first stack of electrodes (11) and the second stack of electrodes (12), with the first stack of electrodes (11) on one side of the median plane (Q1) and the second stack of electrodes (12) on another side of the median plane(Q1).

7. The prismatic battery cell subassembly (10) of any one of claims 5 to 6 in combination with any one of claim 3, comprising at least an additional second stack of electrodes (22), provided, for each polarity, with a multilayer bundle of flexible electrode tabs (36A, 36B), of the same polarity, protruding from a connection side (32) of the additional second stack of electrodes (22),
wherein
- for each polarity, the bottom face (44) of the associated additional current collector (238A, 238B) is welded to the multilayer bundle of flexible electrode tabs (36A, 36B), of the same polarity, of the additional second stack of electrodes (22),
- the additional second stack of electrodes (22) has an operational position, wherein the connection side (32) of the additional second stack of electrodes (22), in the operational position, faces and covers a second portion of the top face (42) of each additional current collector (238A, 238B) and
- for each polarity, the associated terminal foot (40A, 40B) is not welded to a portion of the bottom face (44) of the associated additional current collector (238A, 238B) opposite the further portion of the top face (42) of the associated additional current collector (238A, 238B).

8. The prismatic battery cell subassembly (10) of claim 7, wherein one or more of the following holds true:
- for each polarity, the associated additional current collector (238A, 238B) has two opposite sides (46, 48) joining the bottom face (44) and the top face (42), the two opposite sides (46, 48) facing away from each other, the multilayer bundle of flexible electrode tabs (46A, 46B), of the same polarity, of the additional first stack of flexible tabs (21), in the operational position, faces one of the two opposite sides (46, 48) and the multilayer bundle of flexible electrode tabs (46A, 46B), of the same polarity, of the additional second stack of electrodes (22), in the operational position, faces the other one of the two opposite sides (46, 48); and/or
- the additional first stack of electrodes (21) and the additional second stack of electrodes (22), in the operational position, face each other on either side of a median plane (Q2), perpendicular to the top face (42) of each additional current collector (238A, 238B), the median plane (Q2) being preferably a plane of contact between the additional first stack of electrodes (21) and the additional second stack of electrodes (22), with the additional first stack of electrodes (21) on one side of the median plane (Q2) and the additional second stack of electrodes (22) on another side of the median plane (Q2); and/or
- the second stack of electrodes (12) and the additional second stack of electrodes (22), in the operational position, face each other on either side of a median plane (P), the median plane (P) being preferably a plane of contact between the second stack of electrodes (12) and the additional second stack of electrodes (22), the median plane (P) being preferably a plane of symmetry of the prismatic cell subassembly (10).

9. A method of assembling a prismatic battery cell subassembly (10) according to any one of the preceding claims, comprising:
- for each polarity, welding the multilayer bundle of flexible electrode tabs (46a, 46B), of the same polarity, of the first stack of electrodes (11) to the bottom face (44) of the associated current collector (138A, 138B), then
- while the first stack of electrodes (11) is in the assembly position and leaves the portion of the top face (42) of each current collector (138A, 138B) uncovered, welding the terminal foot (40A, 40B), associated with each polarity, to the bottom face of the associated current collector (138A, 138B) using laser welding applied to said portion of the top face (42) of the associated current collector (138A, 138B), and
- subsequently moving the first stack of electrodes (11) to the operational position.

10. The method of claim 9 applied to a prismatic battery cell subassembly (10) according to claim 7 or claim 8, further comprising:
- for each polarity, welding the multilayer bundle of flexible electrode tabs (46A, 46B), of the same polarity, of the second stack or electrodes (12) to the bottom face (44) of the associated current collector (138A, 138B),
- for each polarity, welding the multilayer bundle of flexible electrode tabs, of the same polarity, of the additional first stack of electrodes (21) to the bottom face of the associated additional current collector (238A, 238B),
- for each polarity, welding the multilayer bundle of flexible electrode tabs, of the same polarity, of the additional second stack of electrodes (22) to the bottom face (44) of the associated additional current collector (238A, 238B), then
- while the additional first stack of electrodes (21) is in the assembly position and leaves the portion of the top face (42) of each additional current collector (238A, 238B) uncovered, and the second stack of electrodes (12) is in the operational position and faces the additional second stack of electrodes (22) in the operational position, welding the terminal foot (40A, 40B) associated with each polarity to the bottom face (44) of the associated additional current collector (238A, 238B) using laser welding applied to said portion of the top face of the associated additional current collector, and
- subsequently moving the additional first stack of electrodes (21) to the operational position.

11. The method of claim 10, wherein one or more of the following holds true:
- for each polarity, welding the multilayer bundle of flexible electrode tabs (46A, 46B), of the same polarity, of the first stack of the electrodes (11) to the bottom face (44) of the current collector (138A, 138B) is performed with the first stack of the electrodes (11) in the assembly position, and/or
- for each polarity, welding the multilayer bundle of flexible electrode tabs (46A, 46B), of the same polarity, of the second stack of the electrodes (12) to the bottom face (44) of the current collector (138A, 138B) is performed with the second stack of the electrodes (11) in the assembly position, and/or
- for each polarity, welding the multilayer bundle of flexible electrode tabs, of the same polarity, of the additional first stack of electrodes (21) to the bottom face of the additional current collector (238A, 238B) is performed with the additional stack of the electrodes (21) in the assembly position, and/or
- for each polarity, welding the multilayer bundle of flexible electrode tabs (46A, 46B), of the same polarity, of the additional second stack of electrodes (22) to the bottom face (44) of the associated additional current collector (238A, 238B) is performed with the additional second stack of the electrodes (22) in the assembly position.

12. The method of any one of claims 9 to 11, further comprising one or more of the following preliminary steps:
- pre-welding flexible tabs (30), of the same polarity, of the first stack of electrodes (11), to form the multilayer bundle of flexible tabs (46A, 46B) of the first stack of electrodes (11); and/or
- pre-welding flexible tabs (30), of the same polarity, of the second stack of electrodes (12), to form the multilayer bundle of flexible tabs (46A, 46B) of the second stack of electrodes (12); and/or
- pre-welding flexible tabs (30), of the same polarity, of the additional first stack of electrodes (21), to form the multilayer bundle of flexible tabs (46A, 46B) of the additional first stack of electrodes (21); and/or
- pre-welding flexible tabs (30), of the same polarity, of the additional second stack of electrodes (22), to form the multilayer bundle of flexible tabs (46A, 46B) of the additional second stack of electrodes (22).
